(19) **Europäisches Patentamt / European Patent Office / Office européen des brevets**

(11) **EP 3 345 476 A1**

(12) # EUROPEAN PATENT APPLICATION

(43) Date of publication:
**11.07.2018 Bulletin 2018/28**

(21) Application number: **17150318.8**

(22) Date of filing: **04.01.2017**

(51) Int Cl.:
*A01K 5/02* (2006.01)     *A01K 27/00* (2006.01)
*A01K 29/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **IoAgrit Oy**
**21410 Vanhalinna (FI)**

(72) Inventor: **Kangas, Arto**
**20660 Littoinen (FI)**

(74) Representative: **Suominen, Kaisa Liisa**
**Moosedog Oy**
**Rykmentintie 2B**
**20810 Turku (FI)**

(54) **SYSTEM AND METHOD FOR CONTROLLING FEEDING OF RUMINATING LIVESTOCK ANIMALS**

(57)     Disclosed is a method for controlling feeding of ruminating livestock animals, comprising equipping each animal with a rumination sensor (102), receiving rumination related information from the rumination sensor at a server (104), and using the rumination related information to calculate an optimal feeding time for at least one animal.

FIG. 1

EP 3 345 476 A1

## Description

TECHNICAL FIELD

The present disclosure relates generally to livestock monitoring, and more specifically, to a system and a method for controlling feeding of ruminating livestock animals.

BACKGROUND

Owners of livestock animals (e.g. cattle, horses, sheep, pigs etc.) need to manage them on a large scale. Since labour availability, skill and resources are often limited, management of the livestock animals has become increasing challenging. Typically, owners become aware about trouble in their livestock only when they see a drop in output (e.g. yield of milk from cows or camels). The drop could have been caused by a variety of factors, such as change in feed quality, reproductive status, sickness etc. There is a need to provide attention to individual livestock animals in a herd, since the yield from each animal may be different, and may be influenced by different factors including rumination. Rumination is the process by which an animal (e.g. a cow or a camel) regurgitates previously consumed feed and masticates it a second time.

The rumination behaviour of a livestock animal is an important health indicator, and monitoring changes in rumination behaviour can be used to pre-empt factors that may cause a reduction in productivity.

Typically, tags have been in use to monitor the rumination or activity of livestock animals. A typical system may use sensors like an accelerometer or a microphone installed on a neck of a livestock animal to detect movements. However such sensors consume high energy and power constantly, which mandates charging the batteries in the sensors frequently, which is particularly cumbersome for a large herd.

Therefore, in light of the foregoing discussion, there exists a need to overcome the aforementioned drawbacks in existing systems for monitoring rumination of the livestock animals that consume high power, in order to control feeding of the livestock animals and improve productivity and yield from the livestock animals.

SUMMARY

The present disclosure provides a method for controlling feeding of ruminating livestock animals, comprising:

- equipping each animal with a rumination sensor,
- receiving rumination related information from the rumination sensor at a server, and
- using the rumination related information to calculate an optimal feeding time for at least one animal.

The present disclosure also provides a system for controlling feeding of ruminating livestock animals, comprising:

- a server, and
- a collar for each animal, the collar comprising a processor, communication means, a power source and a rumination sensor, the server being configured to

    - receive rumination related information from the rumination sensor,
    - use the received rumination information to calculate an optimal feeding time for at least one animal, and
    - send a signal to a feeding system to feed the animals based on the optimal feeding time.

Embodiments of the present disclosure substantially eliminate or at least partially address the aforementioned problems in the prior art, by providing a low power system that takes into account environmental changes and accurately monitors air pressure to determine an optimal feeding time of the livestock animals for optimizing their health and productivity.

Additional aspects, advantages, features and objects of the present disclosure are made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

FIG. 1 is a schematic illustration of a system in accordance with an embodiment of the present disclosure;

FIG. 2 illustrates a functional block diagram of a collar in accordance with an embodiment of the present disclosure; and

FIG. 3 is a flow diagram that illustrates a method in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible. For example, embodiments may be created using software, or using a FPGA(s), or by using an ASIC(s).

The present disclosure provides a method for controlling feeding of ruminating livestock animals, comprising:

- equipping each animal with a rumination sensor,
- receiving rumination related information from the rumination sensor at a server, and
- using the rumination related information to calculate an optimal feeding time for at least one animal.

The method thus accurately calculates an optimal feeding time of the livestock animals, which can be used to control their feeding.

According to an embodiment, the rumination sensor is selected from barometric altitude sensor, a microphone, an accelerometer and combinations thereof.

According to another embodiment, the rumination sensor is a barometric altitude sensor and the method further comprises

- receiving a pressure change communication threshold at the barometric altitude sensor,
- measuring barometric pressure and detecting a change in the barometric pressure,
- if the detected pressure change exceeds the pressure change communication threshold, communicating the measured barometric pressure to the server and receiving a new pressure change communication threshold from the server, and
- using the detected pressure changes exceeding the pressure change communication threshold to calculate the optimal feeding time for at least one animal.

In this embodiment, the system and method is based on monitoring a rumination time of the livestock animals using compensation parameters related to air pressure (e.g. a change in temperature, wind etc.) in the environment.

In an embodiment, the collar may be attached to a neck of the livestock animal. In another embodiment, the collar may be attached to any body part of the livestock animals. In yet another embodiment, one or more collars may be attached to the neck of the livestock animal. The shape of the collar may be circular, square, rectangular, or any shape suitable to the livestock animal. The collar optionally comprises an accelerometer sensor (which may be the same accelerometer as is used as the rumination sensor or a different accelerometer sensor, for example of a different type or positioned differently from the rumination sensor) and / or a gyroscope sensor. The accelerometer sensor and / or the gyroscope sensor may sense a sleeping pattern of the livestock animal and identify whether the livestock animal is suffering from any diseases / sickness. In an embodiment, the collar may comprise one or more rumination sensor(s).

In the embodiment where a barometric altitude sensor is used, it measures barometric pressure (e.g. an atmospheric pressure) at predefined time intervals (e.g. a first time interval, a second time interval etc.). The barometric altitude sensor further detects a change in the barometric pressure at the collar of the each livestock animal. The change in the barometric pressure may be calculated by subtracting the barometric pressure measured in the first time interval from the barometric pressure measured in the second time interval at the collar of each livestock animal.

The processor may determine whether the detected pressure change exceeds the pressure change communication threshold. The barometric altitude sensor communicates the measured barometric pressure to the server when the detected pressure change exceeds the pressure change communication threshold. The barometric altitude sensor may communicate the measured barometric pressure to one or more servers.

The collar or the barometric altitude sensor in the collar receives a new pressure change communication threshold from the server when the detected pressure change exceeds the pressure change communication threshold. The server calculates the optimal feeding time for at least one livestock animal using the amount that the detected pressure changes exceed the pressure change communication threshold.

In the embodiment where a microphone is used, the microphone is configured to receive an audio signal emitted by the internal organs of the animal, which audio signal forms the rumination related information. This visceral sound is then analysed to determine whether the animal is for example eating, swallowing or ruminating. The received audio signal is analysed in the processing unit of the collar and the result of the analysis is used for determining an optimal feeding time.

In the embodiment where an accelerometer is used, the accelerometer is configured to measure movement activity of the animal. In a preferred embodiment, the accelerometer is positioned close to the throat of the animal to enable recordation of minute movements related to swallowing and chewing. The recorded movement data is sent to the server which analyses it to provide more detailed rumination related information, in order to determine an optimal feeding time.

When a combination of rumination sensors is used, the functioning of the system and method may be further enhanced, as more accurate information is obtained from the combination of sensors.

According to an embodiment, the optimal feeding time is calculated for a herd of animals. In an embodiment, the server may obtain information that comprises an amount that the detected pressure change exceeds the pressure change communication threshold from a collar of each of the animals in a herd. The server calculates an optimal feeding time for the herd of animals using the detected pressure change exceeding the pressure change communication threshold received from the collar of each livestock animals. In an embodiment, the information may further comprise at least one of a category of the livestock animal, a weight of the livestock animal, a time taken for rumination by each animal in a herd etc.

According to another embodiment, the calculation of the optimal feeding time comprises using a statistical method for excluding a communicated pressure change that relates to a change in atmospheric pressure unrelated to the livestock animal. In an embodiment, the server may receive from the collar a pressure change exceeding the pressure change communication threshold of the livestock animal. The server may then group the detected pressure change of the livestock animals in a time series of data points. In an embodiment, pressure changes that relate to a change in atmospheric pressure are excluded from the measured barometric pressure using a trend analysis or statistical methods to calculate a sufficient reliable resting time and the optimal feeding time for at least one livestock animal. For example, the atmospheric pressure change per meter at sea level may be about 10 pascals (Pa) where the weather dependent atmospheric pressure may vary thousands of pascals easily in a relative time series. In an embodiment, a transient of the atmospheric pressure is changed when a door of the shed (e.g. a cowshed) is opened or closed. In an embodiment, the transient of the atmospheric pressure may need to be compensated for environmental effects.

According to yet another embodiment, the calculation of the optimal feeding time comprises excluding communicated pressure changes that relate to a change in atmospheric pressure as obtained from a fixed reference barometric altitude sensor. In an embodiment, the fixed reference barometric altitude sensor may be used for a small sized herd of animals. The fixed reference barometric altitude sensor may be preferably installed in a fixed location in a shed (e.g. a cowshed). In an embodiment, the fixed reference barometric altitude sensor may be sufficiently powered using a battery, which is present within the fixed reference barometric altitude sensor. The fixed reference barometric altitude sensor may measure atmospheric pressure without interruption and communicate the measured atmospheric pressure to the server to compensate for the environmental effects while measuring the barometric pressure (e.g. a change in temperature, wind etc.).

According to yet another embodiment, the calculation of the optimal feeding time for a herd of animals comprises using the equation

$$D = B \sum_{n=1}^{N} x_n C_n$$

wherein

D is a calculated total rumination time,
B is a general rumination coefficient for the herd,
N is a number of animals in the herd,
$x_n$ is resting time of animal n, and
$C_n$ is a resting time coefficient of animal n.

According to yet another embodiment, when the difference between D and a pre-determined total rumination time for the herd per feeding is smaller than a predefined threshold, the server sends a signal to a feeding system to provide food for the animals.

In an embodiment, individual parameters (e.g. a calculated total rumination time, a general rumination coefficient for a herd, a number of animals in the herd, a resting time of an animal and a resting time coefficient of the animal) may be used to analyze specific properties of a livestock animal. In an embodiment, the server communicates a signal to a feeding system to feed food for livestock animals when the calculated total ruminated time reaches a predetermined total rumination time of the livestock animals. In another embodiment, the server communicates an alert related to the rumination time to the feeding system (e.g. indicating that it is a good time to feed the livestock animals). In an embodiment, the alert comprises a text message, a sound message (e.g. a voice message), an alarm, a phone call or a pop-up alert etc. The method may enable increasing milk production of livestock animals (e.g. cows) by feeding them taking into account various individual parameters such as resting, rumination times, the time of day etc.

According to yet another embodiment, the animal is selected from a goat, a cow, a sheep and a camel.

The present disclosure also provides a system for controlling feeding of ruminating livestock animals, comprising:

- a server, and
- a collar for each animal, the collar comprising a processor, communication means, a power source and a rumination sensor,
the server being configured to

- receive rumination related information from the rumination sensor,
- use the received rumination information to calculate an optimal feeding time for at least one animal, and
- send a signal to a feeding system to feed the animals based on the optimal feeding time.

The advantages of the present system are thus identical to those disclosed above in connection with the present method and the embodiments listed above in connection with the method apply mutatis mutandis to the system and vice versa. Furthermore, the system compares a resting time or a rumination time of a livestock animal to an average resting time or rumination time of the livestock animals (e.g. a herd) to identify potentially high milk producing animals and adjust individual parameters in the algorithm according to the properties of specific animals (e.g. cows that ruminate more may produce more milk).

In an embodiment, the barometric altitude sensor measures the barometric pressure even when the livestock animal is in a standing position or a resting position (e.g. lying down). The barometric altitude sensor may be configured to determine a 0.5 meter altitude change. In an embodiment, the barometric altitude sensor may be a Freescale semiconductor - Next Experience MPL3115A2 sensor). In an embodiment, the collar is powered using a power source such as a battery. The collar (e.g. each collar attached with each livestock animal) may be configured to receive a pressure change communication threshold (e.g. $\pm 6$ pascals) from the server.

In an embodiment, the rumination sensor communicates with the server using the communication means. In an embodiment, the rumination sensor communicates with one or more servers using one or more communication means. In an embodiment, the communication means comprises a wired communication, a wireless communication, a Bluetooth communication, an infrared communication or a Zigbee technology etc. In an embodiment, when a barometric altitude sensor is used, the server determines a new pressure change communication threshold without receiving the detected pressure change from the barometric altitude sensor.

In an embodiment, the server is a cloud server. The server may be a tablet, a desktop, a smart phone, a personal computer, an electronic notebook, a mobile communication device, an augmented reality device or a virtual reality device with sufficient capabilities for data storage and processing.

According to an embodiment, the barometric altitude sensor is configured to have an active mode and a sleep mode. In an embodiment, the barometric altitude sensor consumes less energy by configuring the barometric altitude sensor to operate in an interrupt mode (e.g. the active mode and the sleep mode). The barometric altitude sensor may be in an active mode and execute a program code when measuring the barometric pressure, when a detected pressure change exceeds a pressure change communication threshold, or when a pressure change communication threshold is received from the server. The method may further reduce energy consumption by the collar by activating the barometric altitude sensor from a sleep mode to an active mode only when a barometric pressure needs to be measured.

A typical server usable in the present description comprises a processor, a memory, a plurality of buses, a power supply, an external bus interface, a communication interface, an Universal Serial Bus Interface (USB), an application program interface, an Ethernet, a High-Definition Multimedia interface (HDMI) and a graphics processor. The processor and the memory are configurable to store data. The memory may be configured as on-board memory of the processor or in other forms can also include expandable memory such as DDR memory, Flash Memory, EPROM, ROM, or various other forms or any combination thereof generally illustrated as the memory.

The plurality of buses may be configured to couple data and signals to various components within the server. The server may also include a single bus, multiple buses or any combination thereof. Indeed, various types of bus configurations may be used as needed or desired including, but not limited to, any combination or portion of a serial bus, a parallel bus, a serial--parallel bus, a universal serial bus, industry standard bus, controller area network bus, a serial peripheral bus, a universal asynchronous receiver transmitter bus, a control bus, standard digital input output bus, inter integrated circuit or any combination thereof. The server may also include the external bus interface, the communication interface and the application program interface or any combination thereof configurable to be coupled to the plurality of buses or any combination thereof. Any combination of interfaces may be configured in any combination of hardware, software, or firmware, and can include any combination or portion of a serial bus interface, a parallel bus interface, a serial--parallel bus interface, a universal serial bus interface, industry standard bus interface, controller area network bus interface, a serial peripheral interface, a universal asynchronous receiver transmitter interface, a control bus interface, standard digital input output interface or any combination thereof.

A power supply may capable of providing power to the server. The power supply may be an internal power supply and in other forms can be provided external to the server.

The server may be configured to use any type or combination of wire line or wireless communication to manage energy use at a site, including, but not limited to, power-line communication, wire line communication, wireless communication, 2G, 3G, 4G or 5G cellular networks, Zigbee based communication, INSETEON based communication, X10 based communication, Z-Wave based communication, Worldwide Interoperability for Microwave Access (WiMAX) based communication, Bluetooth based communication, Wireless Fidelity based communication, 802.11-based communication, 802.15-based communication, 802.16-based communication, proprietary communication or any combination thereof.

The communication interface may be configured to enable access to a communication device, the server and a wireless energy network. The communication interface may be configured to detect an outgoing message formatted by the processor and configure the outgoing message to a message bus format that can be coupled to the bus and a communication device. For example, outgoing message can include network device data configured to be output to a wireless energy network, but processed into a message bus format prior to outputting to the communication device. The communication interface may then convert the outgoing message from a message bus format to a format that can be output by a specific communication device. The Universal Serial Bus interface (USB is a set of interface specifications for high speed wired communication between electronics systems peripherals and devices with or without PC/server. The Ethernet is configured to connect multiple computers to a cable, thereby forming a bus structure.

Embodiments of the present disclosure may be used to calculate an optimal feeding time of the livestock animals by excluding pressure changes that relate to changes in atmospheric pressure. Further, the embodiments of the present disclosure may control feeding of ruminating livestock animals based on the optimal feeding time. The embodiments of the present disclosure may reduce energy consumption by the collar by activating the barometric altitude sensor from a sleep mode to an active mode when a barometric pressure needs to be measured.

DETAILED DESCRIPTION OF THE DRAWINGS

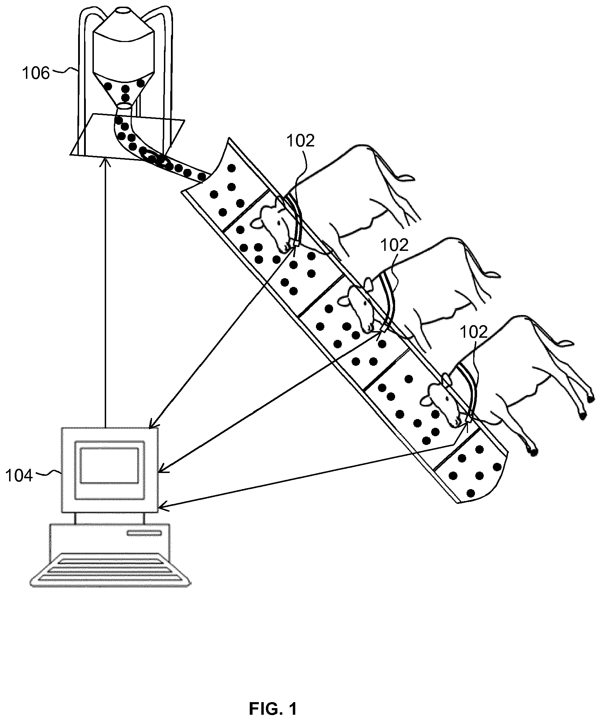

FIG. 1 is a schematic illustration of a system in accordance with an embodiment of the present disclosure. The system comprises a collar **102**, a server **104** and a feeding system **106**. The collar **102** is communicatively coupled to the server **104**. The collar **102** is coupled to a body part of an animal. The server **104** is communicatively coupled to the feeding system **106**. The functions of these parts as have been described above.

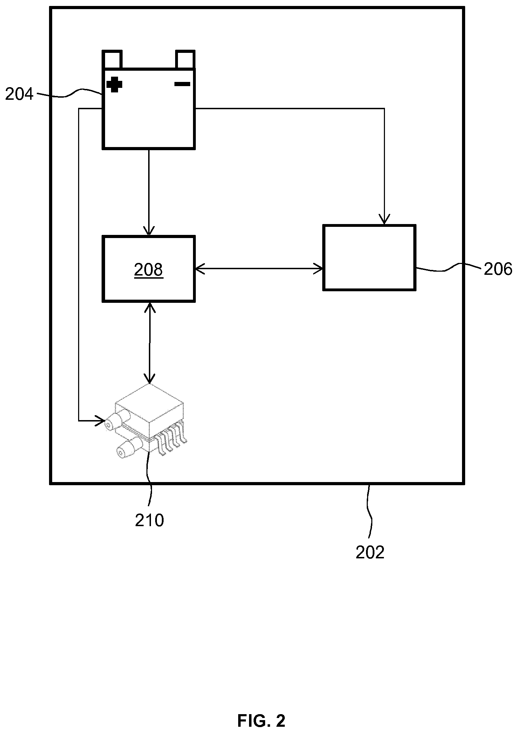

FIG. 2 illustrates a functional block diagram of a collar **202** in accordance with an embodiment of the present disclosure. The collar comprises a power source **204**, a communication means **206**, a processor **208** and a rumination sensor **210**. The functions of these parts as have been described above.

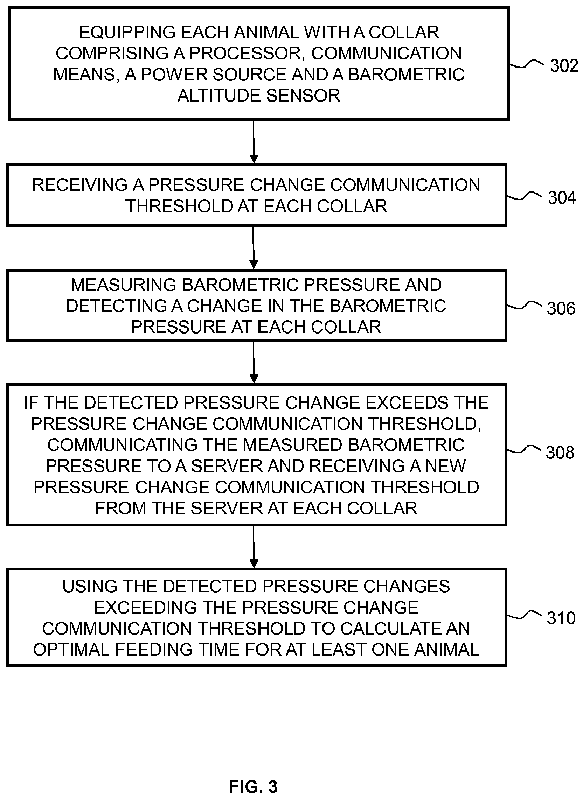

FIG. 3 is a flow diagram that illustrates a method in accordance with an embodiment of the present disclosure, when the rumination sensor is a barometric altitude sensor. At step **302**, each animal is equipped with a collar that comprises a processor, communication means, a power source and a barometric altitude sensor. At step **304**, a pressure change communication threshold is received at each collar. At step **306**, a barometric pressure is measured and a change in the barometric pressure at each collar is detected. At step **308**, the measured barometric pressure is communicated to a server when the detected pressure change exceeds the pressure change communication threshold and a new pressure change communication threshold is received from the server at each collar. At step **310**, an optimal feeding time for at least one livestock animal is calculated using the detected pressure changes exceeding the pressure change communication threshold.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

**Claims**

1. A method for controlling feeding of ruminating livestock animals, comprising:

   - equipping each animal with a rumination sensor,
   - receiving rumination related information from the rumination sensor at a server, and
   - using the rumination related information to calculate an optimal feeding time for at least one animal.

2. A method according to claim 1, wherein the rumination sensor is selected from barometric altitude sensor, a microphone, an accelerometer and combinations thereof.

3. A method according to claim 2, wherein the rumination sensor is a barometric altitude sensor and the method further comprises

   - receiving a pressure change communication threshold at the barometric altitude sensor,
   - measuring barometric pressure and detecting a change in the barometric pressure,
   - if the detected pressure change exceeds the pressure change communication threshold, communicating the measured barometric pressure to the server and receiving a new pressure change communication threshold from the server, and
- using the detected pressure changes exceeding the pressure change communication threshold to calculate the optimal feeding time for at least one animal.

4. A method according to any of the preceding claims, wherein the optimal feeding time is calculated for a herd of animals.

5. A method according to claim 3 or 4, wherein the calculation of the optimal feeding time comprises using a statistical method for excluding communicated pressure change that relate to a change in atmospheric pressure unrelated to the animal.

6. A method according to claim 3 or 4, wherein the calculation of the optimal feeding time comprises excluding communicated pressure changes that relate to a change in atmospheric pressure as obtained from a fixed reference barometric altitude sensor.

7. A method according to any of the preceding claims, wherein the calculation of the optimal feeding time for a herd of animals comprises using the equation

$$D = B \sum_{n=1}^{N} x_n C_n$$

wherein

D is a calculated total rumination time,
B is a general rumination coefficient for the herd,
N is a number of animals in the herd,
xn is resting time of animal n, and
Cn is a resting time coefficient of animal n.

8. A method according to claim 7, wherein when the difference between D and a pre-determined total rumination time for the herd per feeding is smaller than a pre-defined threshold, the server sends a signal to a feeding system to provide food for the animals.

9. A method according to any of the preceding claims, wherein the animal is selected from a goat, a cow, a sheep and a camel.

10. A system for controlling feeding of ruminating livestock animals, comprising:

- a server, and
- a collar for each animal, the collar comprising a processor, communication means, a power source and a rumination sensor,
the server being configured to

- receive rumination related information from the rumination sensor,
- use the received rumination information to calculate an optimal feeding time for at least one animal, and
- send a signal to a feeding system to feed the animals based on the optimal feeding time.

11. A system according to claim 10, wherein rumination sensor is selected from barometric altitude sensor, a microphone, an accelerometer and combinations thereof.

12. A system according to claim 11, wherein the rumination sensor is a barometric altitude sensor configured to have an active mode and a sleep mode.

FIG. 1

**FIG. 2**

EQUIPPING EACH ANIMAL WITH A COLLAR COMPRISING A PROCESSOR, COMMUNICATION MEANS, A POWER SOURCE AND A BAROMETRIC ALTITUDE SENSOR — 302

RECEIVING A PRESSURE CHANGE COMMUNICATION THRESHOLD AT EACH COLLAR — 304

MEASURING BAROMETRIC PRESSURE AND DETECTING A CHANGE IN THE BAROMETRIC PRESSURE AT EACH COLLAR — 306

IF THE DETECTED PRESSURE CHANGE EXCEEDS THE PRESSURE CHANGE COMMUNICATION THRESHOLD, COMMUNICATING THE MEASURED BAROMETRIC PRESSURE TO A SERVER AND RECEIVING A NEW PRESSURE CHANGE COMMUNICATION THRESHOLD FROM THE SERVER AT EACH COLLAR — 308

USING THE DETECTED PRESSURE CHANGES EXCEEDING THE PRESSURE CHANGE COMMUNICATION THRESHOLD TO CALCULATE AN OPTIMAL FEEDING TIME FOR AT LEAST ONE ANIMAL — 310

FIG. 3

Europäisches
Patentamt

European
Patent Office

Office européen
des brevets

# EUROPEAN SEARCH REPORT

**Application Number**

EP 17 15 0318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/192213 A1 (ZIMMERMAN PATRICK R [US] ET AL) 11 August 2011 (2011-08-11) | 1-6,9-12 | INV. A01K5/02 A01K27/00 A01K29/00 |
| A | * Paragraphs [0014, 0043, 0106, 0108, 0115, 0149, 0200]; claims 1-25; figures 1-4 * | 7,8 | |
| X | JP 2003 219757 A (HARADA ELECTRONICS IND) 5 August 2003 (2003-08-05) | 1-3,5,6, 9-11 | |
| A | * Paragraphs [0010, 0021, 0033, 0037]; claims 1-9; figures 1-10 * | 4,7,8 | |
| X | JP 2 896505 B2 (NORIN SUISANSYO HOKKAIDO NOGYO) 31 May 1999 (1999-05-31) | 1-3,5,6, 9-11 | |
| A | * Paragraphs [0001, 0002, 0009-0013]; claim 1; figures 1-5 * | 4,7,8 | |
| A | WO 02/07644 A2 (BAR SHALOM AVSHALOM [IL]) 31 January 2002 (2002-01-31) * claims 1-28; figures 1-6 * | 1-12 | |
| A | WO 01/67853 A2 (GROWSAFE SYSTEMS LTD [CA]; HUISMA CAMIEL [CA]) 20 September 2001 (2001-09-20) * page 14 - page 16; claims 1-40; figures 1-6 * | 1-12 | TECHNICAL FIELDS SEARCHED (IPC) A01K |
| A | WO 2014/199361 A1 (DAIRYMASTER [IE]) 18 December 2014 (2014-12-18) * claims 1-46; figures 1-4 * | 1-12 | |

The present search report has been drawn up for all claims

| Place of search | Date of completion of the search | Examiner |
|---|---|---|
| The Hague | 11 May 2017 | Steinbock, Lorenz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 0318

11-05-2017

| Patent document cited in search report | | | Publication date | Patent family member(s) | | | Publication date |
|---|---|---|---|---|---|---|---|
| US 2011192213 | A1 | | 11-08-2011 | AU | 2011239541 | A1 | 08-11-2012 |
| | | | | CA | 2796450 | A1 | 20-10-2011 |
| | | | | EP | 2558855 | A2 | 20-02-2013 |
| | | | | EP | 2653031 | A1 | 23-10-2013 |
| | | | | NZ | 602979 | A | 30-05-2014 |
| | | | | US | 2011192213 | A1 | 11-08-2011 |
| | | | | WO | 2011130538 | A2 | 20-10-2011 |
| JP 2003219757 | A | | 05-08-2003 | NONE | | | |
| JP 2896505 | B2 | | 31-05-1999 | JP | 2896505 | B2 | 31-05-1999 |
| | | | | JP | H10262498 | A | 06-10-1998 |
| WO 0207644 | A2 | | 31-01-2002 | AT | 387852 | T | 15-03-2008 |
| | | | | AU | 7865901 | A | 05-02-2002 |
| | | | | DE | 60133106 | T2 | 12-03-2009 |
| | | | | DK | 1301068 | T3 | 07-07-2008 |
| | | | | EP | 1301068 | A2 | 16-04-2003 |
| | | | | IL | 137381 | A | 19-06-2005 |
| | | | | JP | 2004504051 | A | 12-02-2004 |
| | | | | US | 2003205208 | A1 | 06-11-2003 |
| | | | | WO | 0207644 | A2 | 31-01-2002 |
| WO 0167853 | A2 | | 20-09-2001 | AU | 4868701 | A | 24-09-2001 |
| | | | | AU | 2001248687 | B2 | 15-06-2006 |
| | | | | CA | 2403407 | A1 | 20-09-2001 |
| | | | | US | 6427627 | B1 | 06-08-2002 |
| | | | | US | 6497197 | B1 | 24-12-2002 |
| | | | | WO | 0167853 | A2 | 20-09-2001 |
| WO 2014199361 | A1 | | 18-12-2014 | AU | 2014279696 | A1 | 21-01-2016 |
| | | | | AU | 2014279697 | A1 | 21-01-2016 |
| | | | | AU | 2014279698 | A1 | 07-01-2016 |
| | | | | EP | 3007548 | A1 | 20-04-2016 |
| | | | | EP | 3007549 | A1 | 20-04-2016 |
| | | | | EP | 3007552 | A1 | 20-04-2016 |
| | | | | US | 2016135426 | A1 | 19-05-2016 |
| | | | | US | 2016135433 | A1 | 19-05-2016 |
| | | | | US | 2016165851 | A1 | 16-06-2016 |
| | | | | WO | 2014199361 | A1 | 18-12-2014 |
| | | | | WO | 2014199362 | A1 | 18-12-2014 |
| | | | | WO | 2014199363 | A1 | 18-12-2014 |

EPO FORM P0459

For more details about this annex : see Official Journal of the European Patent Office, No. 12/82